# EUROPEAN PATENT SPECIFICATION

(11) **EP 3 335 992 B1**
(45) Date of publication and mention of the grant of the patent: **06.11.2024**
(21) Application number: 16275173.9
(22) Date of filing: 16.12.2016
(51) Int. Cl.: B64D 15/02, B64D 37/32

(54) **ICE PROTECTION SYSTEM**
EISSCHUTZSYSTEM
SYSTÈME DE PROTECTION CONTRE LA GLACE

(43) Date of publication of application: 20.06.2018
(73) Proprietor: HS Marston Aerospace Limited, Wolverhampton WV10 6QJ (GB)
(72) Inventor: PHILLIPS, Paul P., Bromsgrove, Worcestershire B61 8LY (GB)
(74) Representative: Dehns

(56) References cited:
- EP-A2- 2 520 493
- WO-A2-2006/058774
- GB-A- 2 499 578

## Description

### TECHNICAL FIELD

The present disclosure relates to an ice protection system for an aircraft.

### BACKGROUND

Aircraft surfaces, for example control surfaces, are often provided with de-icing systems. Such systems may prevent the accumulation of ice on the surface or melt ice which has already accumulated on the surface.

Known de-icing systems may employ electrical heating elements or hot gas bled from an aircraft engine.

It is desirable to provide a de-icing system which mitigates the need to extract energy from the aircraft power supply.

GB 2 499 578 A, EP 2 520 493 A2 and WO 2006/058774 A2 disclose prior art systems EP 2 520 493 A2 discloses a fuel system comprising a fuel tank, a catalytic inerting device for producing oxygen depleted air (ODA) by reaction of fuel vapour from the fuel tank with air, and a separator device for separating carbon dioxide from the ODA gas before feeding the carbon dioxide depleted ODA gas to the fuel tank so as to render the fuel tank ullage atmosphere inert.

### SUMMARY

According to one embodiment of the present disclosure, there is provided an aircraft according to claim 1.

According to another embodiment of the present disclosure there is provided a method of de-icing an aircraft structure or surface as set forth in claim 2.

The step of removing heat from the output gas stream may comprise condensing water out of the output gas stream.

### BRIEF DESCRIPTION OF THE DRAWINGS

Some exemplary embodiments and features of the present disclosure will now be described by way of example only, and with reference to the following drawings in which:
Figure 1 shows a block diagram showing a fuel tank inerting system;
Figure 2 shows a detail of the system of Figure 1; and
Figure 3 shows an example aircraft structure incorporating ice protection system.

### DETAILED DESCRIPTION

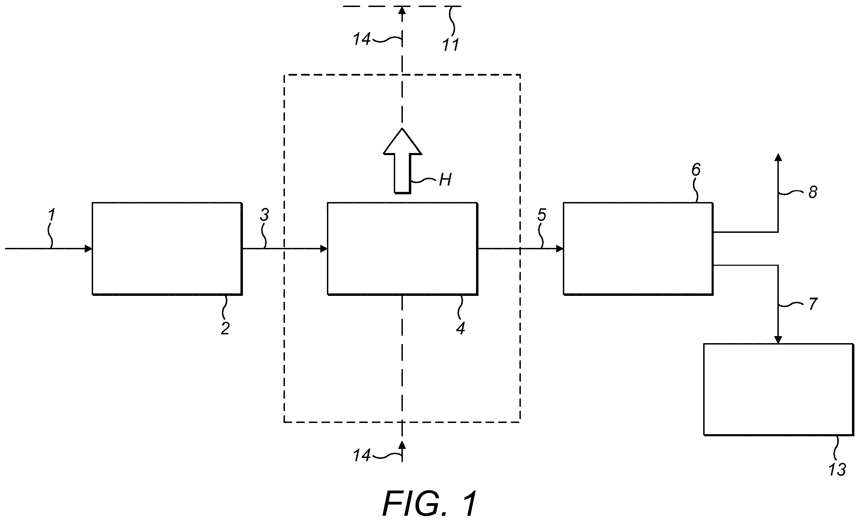

With reference to Figure 1, an inert gas generating system for an aircraft is illustrated. Fuel vapour 1 is fed to a catalyst 2 with oxygen, which oxidises the fuel vapour to produce an inerting gas supply 3. The inerting gas supply 3 comprises carbon dioxide and water. The inerting gas supply 3 is directed to a condenser 4, which condenses water out of the inerting gas supply 3. The remaining two phase mixture 5 is supplied to a water separator 6, which separates the condensed water from the carbon dioxide. The carbon dioxide 7 is fed to a fuel tank 13 of the aircraft whilst the liquid water 8 is removed from the system. The carbon dioxide forms a protective atmosphere over the fuel in the fuel tank, reducing the likelihood of fuel vapour igniting in the fuel tank.

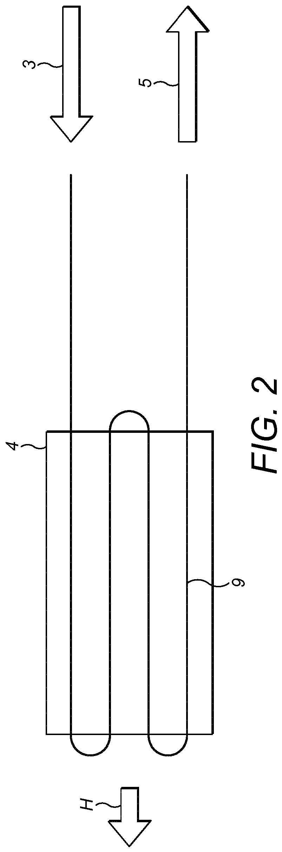

As illustrated schematically in Figure 2, the condenser 4 includes a flow path 9 for the inerting gas supply 3, allowing heat transfer H to take place between an external cooling source and the inerting gas supply 3.

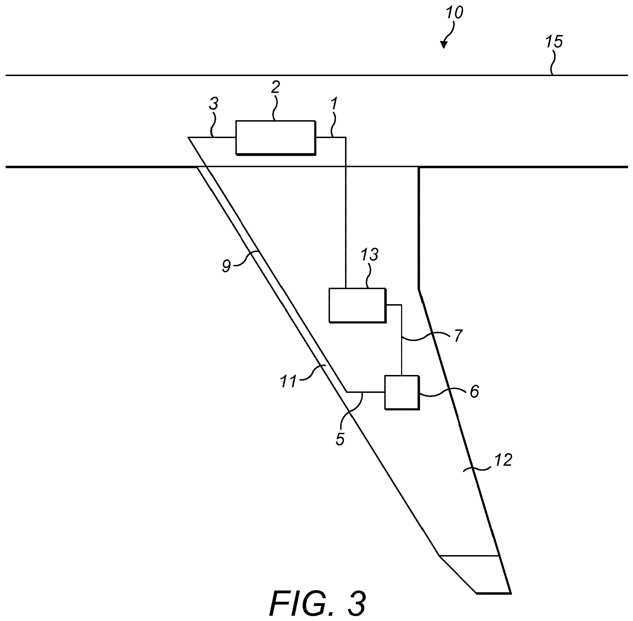

The system of Figures 1 and 2 is installed on board an aircraft 10, as illustrated schematically in Figure 3. The aircraft 10 may include one or more fuel tanks 13. There may for example be a left wing tank 13 positioned in the left wing 12 of the aircraft, a right wing tank positioned in the right wing of the aircraft, and/or a centre tank positioned in the fuselage 15.

Certain areas of the aircraft 10, such as the leading edge 11 of the wing 12, are susceptible to icing during operation of the aircraft 10 and therefore require ice protection. Other susceptible structures and surfaces include engine intakes tail surfaces, control surfaces etc.

The heat produced in the condenser 4 is used to provide such protection. Accordingly, the condenser 4 is suitably arranged so as to provide heat to the appropriate surface.

The condenser 4 is positioned in indirect thermal contact with the aircraft structure or surface 11 to be heated, the heat produced in the condenser 4 being transmitted to the aircraft structure or surface 11 to be protected.

A heat transfer fluid 14 receives heat from the condenser 4 and is conducted to the aircraft structure or surface 11. This is illustrated schematically in Figure 1. The heat transfer fluid may be gas, for example air, or liquid, and may be exhausted onto the aircraft structure or surface 11 or be conducted therethrough or therealong.

The embodiments described above may provide a number of advantages. They may provide a continual source of heat to the ice-prone aircraft structure or surface 11 throughout the operation of the aircraft, since the fuel tank inerting system will normally be in operation throughout an entire flight. The system is also, in effect, a passive system that does not require a separate electrical or pneumatic supply.

Although the figures and the accompanying description describe particular embodiments and examples, it is to be understood that the scope of this disclosure is not to be limited to such specific embodiments, and is, instead, to be determined by the appended claims.

## Claims

1. An aircraft (10) comprising a system for de-icing an aircraft structure or surface (11) susceptible to icing during operation of the aircraft (10), the system comprising:
an inert gas generating system comprising a catalyst (2) for receiving fuel and oxygen and converting the fuel and oxygen to CO₂ and H₂O in gaseous form;
a condenser (4) for condensing the H₂O to liquid form, the condenser (4) providing heat to a heat transfer fluid (14) so as to prevent the accumulation of ice on the aircraft structure or surface (11), or melt ice which has already accumulated on the aircraft structure or surface (11); and
the heat transfer fluid (14) receiving heat from said condenser (4), the heated fluid (14) being conducted to said aircraft structure or surface (11),
wherein the aircraft structure or surface (11) is a leading edge of a wing, an engine intake, a tail surface or a control surface, and the condenser (4) is positioned in indirect thermal contact with the aircraft structure or surface (11) to be heated, the heat produced in the condenser (4) being transmitted to the aircraft structure or surface (11) to be protected.

2. A method of de-icing an aircraft structure or surface (11) susceptible to icing during operation of an aircraft (10), comprising the steps of:
removing heat from the output gas stream (3) of an inert gas generating system; and
supplying the removed heat to the aircraft structure or surface (11) so as to prevent the accumulation of ice on the aircraft structure or surface (11), or melt ice which has already accumulated on the aircraft structure or surface (11),
wherein the step of supplying the heat to an aircraft structure or surface (11) comprises transferring heat from a condenser (4) to a heating fluid (14) which is conducted to said aircraft structure or surface (11), and
wherein the aircraft structure or surface (11) is a leading edge of a wing, an engine intake, a tail surface or a control surface, and the condenser (4) is positioned in indirect thermal contact with the aircraft structure or surface (11) to be heated, the heat produced in the condenser (4) being transmitted to the aircraft structure or surface (11) to be protected.

3. The method of claim 2, wherein the step of removing heat from the output gas stream (3) comprises condensing water out of the output gas stream (3).

## Patentansprüche

1. Flugzeug (10), umfassend ein System zum Enteisen einer Flugzeugstruktur oder -oberfläche (11), die während des Betriebs des Flugzeugs (10) zur Vereisung neigt, wobei das System Folgendes umfasst:
ein Inertgaserzeugungssystem, umfassend einen Katalysator (2) zum Aufnehmen von Brennstoff und Sauerstoff und zum Umwandeln des Brennstoffs und Sauerstoffs in CO₂ und H₂O in gasförmiger Form;
einen Kondensator (4) zum Kondensieren des H₂O in flüssiger Form, wobei der Kondensator (4) Wärme an ein Wärmeübertragungsfluid (14) bereitstellt, um so die Ansammlung von Eis auf der Flugzeugstruktur oder -oberfläche (11) zu verhindern oder Eis zu schmelzen, das sich bereits auf der Flugzeugstruktur oder - oberfläche (11) angesammelt hat; und wobei das Wärmeübertragungsfluid (14) Wärme von dem Kondensator (4) aufnimmt, wobei das erwärmte Fluid (14) zu der Flugzeugstruktur oder -oberfläche (11) geleitet wird,
wobei die Flugzeugstruktur oder -oberfläche (11) eine Vorderkante einer Tragfläche, ein Triebwerkseinlass, eine Leitwerkfläche oder eine Steuerfläche ist und der Kondensator (4) in indirektem thermischen Kontakt mit der zu erwärmenden Flugzeugstruktur oder -oberfläche (11) positioniert ist, wobei die im Kondensator (4) erzeugte Wärme auf die zu schützende Flugzeugstruktur oder -oberfläche (11) übertragen wird.

2. Verfahren zum Enteisen einer Flugzeugstruktur oder - oberfläche (11), die während des Betriebs eines Flugzeugs (10) zur Vereisung neigt, umfassend die folgenden Schritte:
Abführen von Wärme aus dem Auslassgasstrom (3) eines Inertgaserzeugungssystems; und
Zuführen der abgeführten Wärme zur Flugzeugstruktur oder - oberfläche (11), um so die Ansammlung von Eis auf der Flugzeugstruktur oder -oberfläche (11) zu verhindern oder Eis zu schmelzen, das sich bereits auf der Flugzeugstruktur oder - oberfläche (11) angesammelt hat,
wobei der Schritt des Zuführens der Wärme zu einer Flugzeugstruktur oder -oberfläche (11) Übertragen von Wärme von einem Kondensator (4) auf ein Erwärmungsfluid (14) umfasst, das zu der Flugzeugstruktur oder -oberfläche (11) geleitet wird, und wobei die Flugzeugstruktur oder -oberfläche (11) eine Vorderkante einer Tragfläche, ein Triebwerkseinlass, eine Leitwerkfläche oder eine Steuerfläche ist und der Kondensator (4) in indirektem thermischen Kontakt mit der zu erwärmenden Flugzeugstruktur oder -oberfläche (11) positioniert ist, wobei die im Kondensator (4) erzeugte Wärme auf die zu schützende Flugzeugstruktur oder -oberfläche (11) übertragen wird.

3. Verfahren nach Anspruch 2, wobei der Schritt des Abführens von Wärme aus dem Auslassgasstrom (3) Kondensieren von Wasser aus dem Auslassgasstrom (3) umfasst.

## Revendications

1. Aéronef (10) comprenant un système de dégivrage d'une structure ou surface d'aéronef (11) susceptible de givrer pendant le fonctionnement de l'aéronef (10), le système comprenant :
un système de génération de gaz inerte comprenant un catalyseur (2) pour recevoir du carburant et de l'oxygène et convertir le carburant et l'oxygène en CO₂ et H₂O sous forme gazeuse ;
un condenseur (4) pour condenser le H₂O sous forme liquide, le condenseur (4) fournissant de la chaleur à un fluide caloporteur (14) de manière à empêcher l'accumulation de glace sur la structure ou surface d'aéronef (11), ou à faire fondre la glace qui s'est déjà accumulée sur la structure ou surface d'aéronef (11) ; et le fluide caloporteur (14) recevant de la chaleur dudit condenseur (4), le fluide chauffé (14) étant conduit vers ladite structure ou surface d'aéronef (11),
dans lequel la structure ou surface d'aéronef (11) est un bord d'attaque d'une aile, une entrée d'air moteur, une surface de queue ou une gouverne, et le condenseur (4) est positionné en contact thermique indirect avec la structure ou surface d'aéronef (11) à chauffer, la chaleur produite dans le condenseur (4) étant transmise à la structure ou surface d'aéronef (11) à protéger.

2. Procédé de dégivrage d'une structure ou surface d'aéronef (11) susceptible de givrer pendant le fonctionnement d'un aéronef (10), comprenant les étapes de :
élimination de chaleur du flux de gaz de sortie (3) d'un système de génération de gaz inerte ; et
fourniture de la chaleur éliminée à la structure ou surface d'aéronef (11) de manière à empêcher l'accumulation de glace sur la structure ou surface d'aéronef (11), ou à faire fondre la glace qui s'est déjà accumulée sur la structure ou surface d'aéronef (11),
dans lequel l'étape de fourniture de la chaleur à une structure ou surface d'aéronef (11) comprend le transfert de chaleur d'un condenseur (4) à un fluide chauffant (14) qui est conduit vers ladite structure ou surface d'aéronef (11), et
dans lequel la structure ou surface d'aéronef (11) est un bord d'attaque d'une aile, une entrée d'air moteur, une surface de queue ou une gouverne, et le condenseur (4) est positionné en contact thermique indirect avec la structure ou surface d'aéronef (11) à chauffer, la chaleur produite dans le condenseur (4) étant transmise à la structure ou surface d'aéronef (11) à protéger.

3. Procédé selon la revendication 2, dans lequel l'étape d'élimination de chaleur du flux de gaz de sortie (3) comprend la condensation d'eau hors du flux de gaz de sortie (3).
